# EUROPÄISCHE PATENTSCHRIFT

(11) **EP 1 870 625 B1**
(45) Veröffentlichungstag und Bekanntmachung des Hinweises auf die Patenterteilung: **09.09.2009**
(21) Anmeldenummer: 07009746.4
(22) Anmeldetag: 16.05.2007
(51) Int. Cl.: F16L 41/08, F16L 39/00, F15B 13/00

(54) **Fluidsystem**
Fluid system
Système fluidique

(30) Priorität: 23.06.2006 DE 102006028764
(43) Veröffentlichungstag der Anmeldung: 26.12.2007
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen

(56) Entgegenhaltungen:
- WO-A-92/07193
- DE-A1- 10 228 977
- DE-A1- 19 934 574

## Beschreibung

Die Erfindung betrifft ein Fluidsystem mit Strömungswegen für Gase und/oder Flüssigkeiten, mit im wesentlichen prismatischen Funktions-/Baueinheiten, die Strömungskanäle und in Stirnflächen Anschlußöffnungen für benachbarte Funktions-/Baueinheiten aufweisen, und mit einer Montageplatte für die Funktions-/Baueinheiten, die mit ihrer Grundfläche auf der Montageplatte angeordnet sind, wobei die Funktions-/Baueinheiten in der Befestigungslage mit Seitenflächen aneinander anliegen und durch Dichtungsringe gegeneinander abgedichtet sind.

In dem Fluidsystem werden ein oder mehrere flüssige und/oder gasförmige Medien auf bestimmten Strömungswegen geführt, um einen vorbestimmten technischen Zweck zu erfüllen. Es kommen unterschiedliche Anwendungen in Betracht, bei denen beispielsweise die Verteilung und/oder Zusammenführung von strömenden Medien eine Rolle spielt, häufig verbunden mit einer meßtechnischen Überwachung und regelungstechnischen Beeinflussung der strömenden Medien, insbesondere auf dem Gebiet der Verfahrenstechnik. Das vorliegende Fluidsystem ist insbesondere für eine Anwendung im Bereich der Wasseraufbereitung vorgesehen, speziell als Bestandteil einer Umkehrosmoseanlage. Das System ist aber auch für zahlreiche andere Anwendungen geeignet.

Die DE 199 34 574 C2 offenbart ein Fluidsystem der eingangs genannten Art. Obwohl das vorbekannte Fluidsystem Verbesserungen mit sich gebracht hat, hat es einige Nachteile. Bei diesem System sind alle Funktions-/Baueinheiten mit ihrer Grundfläche auf der Montageplatte festgeschraubt, weshalb die Dichtungsringe, die abdichtend an ringförmigen Vertiefungen, die die Anschlußöffnungen umgeben, anliegen, mittels einer Spannvorrichtung zusammengepreßt werden müssen, damit die Befestigungsschrauben durch die Montageplatte hindurch in die Bohrungen der Funktions-/Baueinheiten eingesetzt werden können. Wenn mehrere blockförmige Funktions-/Baueinheiten in Reihe zu montieren sind, ist es nicht immer möglich, die Schrauben ordnungsgemäß in die Funktions-/Baueinheiten einzudrehen, weil sich die O-förmigen Dichtungsringe auf unterschiedliche Maße zusammenpressen. Außerdem können Toleranzen der in einem Raster angeordneten Bohrungen der Montagplatte zu Undichtigkeiten führen, wenn die Dichtungsringe unterschiedlich gepreßt werden. Ein weiterer Nachteil liegt darin, daß für Servicezwecke das System auch von der Rückseite der Montageplatte zugänglich sein muß, da bei einem gegebenenfalls erforderlichen Einzelaustausch einer Funktions-/Baueinheit zunächst die Schrauben auf der Rückseite der Montageplatte entfernt werden müssen. Außerdem verhindert das in die die Anschlußöffnungen umgebenden Vertiefungen eingesteckte Verbindungselement das einfache Herausnehmen einer einzelnen Funktions-/Baueinheit. Ein grundsätzliches Problem besteht darin, daß die Dichtungsringe, die die Dichtheit auch unter Druckbelastung herstellen sollen, keine gleichmäßige Pressung erhalten, wodurch es zu Undichtigkeiten kommen kann.

Ein weiteres Problem ist bei dem vorbekannten Fluidsystem die thermische Belastung. Bei Erhitzung des in den Strömungskanälen geführten Mediums können die auf der Grundplatte befestigten Blöcken der Ausdehnung nicht folgen. Die hieraus resultierenden Verspannungen führen ebenso zu Undichtigkeiten. Ein zusätzlicher Nachteil ist, daß die Blöcke nur einseitig mit ihrer Bodenfläche auf der Montageplatte befestigt sind. Deshalb drücken sie sich bei mechanischer Belastung durch höhere Drücke in den Strömungskanälen weiter oben auseinander, was wiederum zu Undichtigkeiten führen kann.

Insgesamt ist das vorbekannte Fluidsystem in der Montage aufwändig, im Service wenig praktikabel und auf dem pharmazeutischen Gebiet mit seinen totraumfreien Ansprüchen unzulänglich, weil die O-Ringe häufig durch umfangseitige Dichtungen an dem Verbindungselement ergänzt werden müssen.

WO92/07193A offenbart ein modular zusammensetzbares Druckluftaufbereitungssystem für eine Pneumatik mit Funktions-/Baueinheiten, die lösbar auf Verbindungselemente aufgesteckt sind, wobei die Funktions-/Baueinheiten in der Befestigungsanlage mit Seitenflächen aneinander anliegen und durch Dichtungsringe gegeneinander abgedichtet sind. Die Verbindungselemente sind an einer Wand befestigt und halten die Funktions-/Baueinheiten im Abstand von dieser Wand. Die Befestigung der Verbindungselemente erfolgt ohne seitliches Spiel, so dass es z.B. bei sich ändernden thermischen Beanspruchungen und Druckverhältnissen zu Spannungen oder Verformungen der Anordnung aus Verbindungselementen und Funktions-/Baueinheiten kommen kann, die eine Leckage zur Folge haben können.

DE 102 28 977 A1 offenbart ein ähnliches Fluidsystem, bei dem Funktion- /Baueinheiten an Verbindungselementen befestigt sind, die an einer Wand befestigt werden und die Funktions-/Baueinheiten im Abstand von der Wand halten. Die Verbindungselemente enthalten eine Klammer mit einem oberen und einem unteren Flansch, wobei die Flansche Langlöcher aufweisen, damit die Verbindungselemente an einem nicht dargestellten Installationsplatz mit Hilfe von Bolzen oder dergleichen angebracht werden können. Die Langlöcher dienen offenbar dazu, bei auftretenden Toleranzen die fixe Befestigung der Verbindungselemente an vorbestimmten Stellen des Installationsplatzes zu ermöglichen, wobei die Verbindungselemente im befestigten Zustand kein seitliches Spiel mehr haben.

Der vorliegenden Erfindung liegt die Aufgabe zugrunde, ein Fluidsystem der betrachteten Art so zu verbessern, daß es unter den auftretenden thermischen Beanspruchungen und Druckverhältnissen die Dichtigkeit bewahrt und einfach und schnell montierbar ist.

Außerdem sollen einzelne Funktions-/Baueinheiten ohne Demontage des Gesamtsystems oder eines größeren Teils davon frontseitig austauschbar sein.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß Verbindungselemente für benachbarte Funktions-/Baueinheiten an der Montageplatte befestigt sind, auf die die Funktions- /Baueinheiten lösbar aufgesteckt sind. Bei der Montage der Funktions-/Baueinheiten werden diese nach der Befestigung der Verbindungselemente auf der Montageplatte in einer im wesentlichen senkrecht zu der Montageplatte verlaufenden Richtung bevorzugt nach Art eines Nut- und Federsystems auf die Verbindungselemente aufgesetzt bzw. aufgesteckt, so daß sie frontseitig bei Bedarf wieder entfernbar sind, ohne daß die Rückseite der Montageplatte hierzu zugänglich sein muß, da die Funktions-/Baueinheiten ihrerseits nicht direkt an der Montageplatte befestigt, beispielsweise angeschraubt werden. Die Verbindungselemente halten vielmehr die Funktions-/Baueinheiten in der montierten Lage, in der die Funktions-/Baueinheiten mit ihrer Grundfläche an der Montageplatte anliegen. Die Verbindungselemente können auf verschiedene Arten ausgebildet sein, um die zugehörigen Funktions-/Baueinheiten in der Montagestellung zu fixieren, wie weiter unten an zwei Beispielen ausgeführt wird.

Da die Funktions-/Baueinheiten frontseitig auf die Verbindungselemente lösbar aufgesteckt sind, können sie bei Bedarf schnell und einfach einzeln entnommen bzw. ausgetauscht werden.

Außerdem sieht die Erfindung vor, daß die Verbindungselemente mit der Montageplatte mit seitlichem Spiel verrastet sind. Dies bedeutet, daß die Verbindungselemente gegenüber der Position, die zur Befestigung der beiden zugehörigen Funktions-/Baueinheiten vorgesehen ist, seitlich, d.h. parallel zur Ebene der Montageplatte geringfügig verschieblich angeordnet oder anders ausgedrückt: schwimmend gelagert sind. Die mechanischen Kräfte (Drücke) werden durch die umlaufende Randkontur der Verbindungselemente gleichmäßig auf die Dichtungselemente verteilt. Damit ist u.a. eine thermische Ausdehnung der Montageplatte ohne Auswirkung auf die Dichtstellen zwischen den Funktions-/Baueinheiten, und diese biegen oder verspannen sich nicht mehr mit der Folge von Mikroleckagen, wie dies bei dem vorbekannten Fluidsystem auftreten kann.

Diese "schwimmende Verrastung" erfolgt vorzugsweise dadurch, daß in den Boden der Verbindungselemente, der in der Befestigungslage festgleitend an der Montageplatte anliegt, zwei mit Köpfen versehene Stifte eingelassen, bevorzugt eingeschraubt sind, und daß in der Montageplatte an den vorgesehenen Stellen zur "schwimmenden Verrastung" der Verbindungselemente zwei den Stiften entsprechend beabstandete Löcher ausgebildet sind, die jeweils einen Abschnitt mit so großem Durchmesser, daß der Stift- bzw. Schraubenkopf hindurchsteckbar ist, und einen anschließenden länglichen Abschnitt geringerer Breite aufweist, in die die hindurchgesteckten Stifte/Schrauben hineingeschoben bzw. gedreht werden. Dabei ist die überstehende Schaftlänge so bemessen, daß die Verbindungselemente festgleitend an der Montageplatte anliegen. Die schmaleren Abschnitte der Löcher verhindern, daß die Verbindungselemente frontseitig in dieser Lage von der Montageplatte lösbar sind (was nur nach einer Drehbewegung in dem Bereich größeren Durchmessers möglich ist) jedoch lassen die schmaleren Lochbereiche eine geringe Verschiebung der Verbindungselemente zu, so daß fehlerhafte Kettenmaße bei der Ausbildung der Löcher bzw. Bohrungen nicht zu einer zu geringen oder zu großen Verpressung eines Dichtungsrings führt, sondern das Preßmaß der Dichtungsringe ist wegen der Bewegungsmöglichkeit der Verbindungselemente weitestgehend gleichmäßig.

In weiterer Ausgestaltung der Erfindung wird vorgeschlagen, daß die Verbindungselemente jeweils einteilig sind und in den beiden Seitenflächen, die an den zugewandten Stirnseiten von Aussparungen der beiden Funktions-/Baueinheiten anliegen, O-Ringe aufweisen, die die Anschlußöffnungen der zugehörigen Funktions-/Baueinheiten umgeben. Die O-Ringe befinden sich dabei in ringförmigen Vertiefungen der Verbindungselemente, über die sie stirnseitig zunächst etwas vorstehen, so daß sie beim Aufstecken der Funktions-/Baueinheiten fest gegen diese angepreßt werden. Dabei ist bevorzugt, daß die O-Ringe sich direkt am Rand der Anschlußöffnungen befinden, so daß das System für kompakte Prozeßsteuerungen in der Pharmaindustrie wegen des minimalen Totvolumens bestens geeignet ist.

Nach dem Aufstecken der zwei benachbarten Funktions-/Baueinheiten auf das jeweilige Verbindungselement kann die Befestigungslage durch eine Schraube oder Verrastung gesichert werden, die von oben in ein Gewinde oder eine Verrastung des Verbindungselementes eingreift und mit ihrem Schraubenkopf an der Oberseite der beiden Funktions-/Baueinheiten anliegt.

Zur Entnahme einer einzelnen Funktions-/Baueinheit müssen bei dieser Ausführungsform lediglich die Schrauben/Verrastung der beidseitigen Verbindungselemente entfernt werden, woraufhin die Funktions-/Baueinheit frontseitig, d.h. senkrecht zu der Montageplatte, von den Verbindungselementen abgezogen werden kann.

Bei einer alternativen Ausführungsform können die Verbindungselemente aus vorzugsweise zwei Teilen zusammengesetzt sein, wobei ein Teil mit der Montageplatte " schwimmend ", d.h. mit seitlichem Spiel verrastet ist.

Die Funktions-/Baueinheiten haben bei dieser Ausführungsform im Bereich der Anschlußöffnungen ringförmige, im Querschnitt keilartig hinterschnittene Ansätze, die mit ihren Stirnflächen aneinander anliegen, wobei in eine Stirnfläche ein O-Ring eingelassen ist, der bei der Montage gegen die gegenüberliegende Stirnfläche gepreßt wird.

Weiter wird mit Vorteil vorgeschlagen, daß die beiden Teile der Verbindungselemente (querschnittlich) eine der Randkontur der aneinander anliegenden Ansätze entsprechende, etwa V-förmige Aussparung an ihrem insgesamt kreisförmigen inneren Rand aufweisen, derart, daß die Teile der Verbindungselemente in dem montierten Zustand die Ansätze aneinander anpressen, womit der am Rand der Anschlußöffnung angeordnete Dichtungsring bzw. O-Ring fest angepreßt wird. Das andere Teil des Verbindungselementes wird frontseitig in die entsprechende Aussparung der beiden Funktions-/Baueinheiten eingesetzt (und verpreßt den zugehörigen Abschnitt der Ansätze) wobei die zwei Teile anschließend zweckmäßigerweise miteinander verschraubt werden. Auch bei dieser Ausführungsform können einzelne Funktions-/Baueinheiten schnell und einfach entfernt und ausgetauscht werden, indem frontseitig die Schraubverbindung der beiden Teile der Verbindungselemente gelöst und die oberen Hälften der Verbindungselemente abgenommen werden, woraufhin die zugehörige Funktions-/Baueinheit zur frontseitigen Entnahme freiliegt.

Bei dem erfindungsgemäßen System stellen die Verbindungselemente sowohl die Dichtigkeit als auch einen Kraftschluß zwischen den blockförmigen Funktions-/Baueinheiten her, die sich in der Einbaulage gegenseitig selbst stabilisieren. Das System ist auf einfachste Weise ohne Hilfswerkzeuge wie Schraubzwingen oder andere Spannwerkzeuge montierbar. Undichtigkeiten wegen fehlerhafter Montage sind vermieden, und es tritt keine falsche O-Ring-Pressung auf, da das jeweilige Preßmaß immer auf die einzelne Dichtstelle bezogen ist.

Weitere Einzelheiten der Erfindung ergeben sich aus der nachfolgenden Beschreibung bevorzugter Ausführungsformen des Systems sowie anhand der Zeichnungen. Dabei zeigen.
- Figur 1: eine Aufsicht auf eine erste Ausführungsform des erfindungsgemäßen Systems mit drei Funktions-/Baueinheiten sowie ein Querschnitt entlang der Linie A-A;
- Figur 2: eine Stirnansicht einer Funktions-/Baueinheit mit einem Verbindungselement sowie eine perspektivische Darstellung dieser Anordnung;
- Figur 3: eine Darstellung ähnlich Figur 1 in vergrößertem Maßstab;
- Figur 4: eine Aufsicht auf eine Montageplatte mit zwei Loch-Paaren zur Verrastung zweier Verbindungselemente;
- Figur 5: eine Aufsicht auf eine andere Ausführungsform des erfindungsgemäßen Systems sowie Schnittdarstellungen entlang der Linien A-A und B-B.

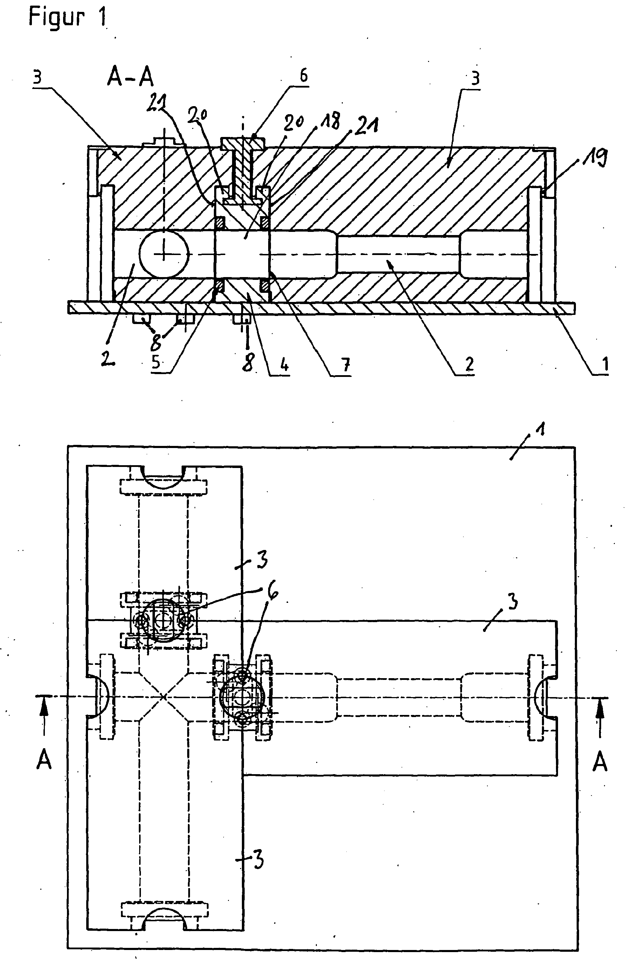

Figur 1 zeigt in einer Aufsicht drei Funktions-/Baueinheiten 3, die auf einer Montageplatte 1 angeordnet sind. Die Funktions-/Baueinheiten 3 sind so zusammengesetzt, daß ihre Strömungskanäle 2 miteinander fluchten.

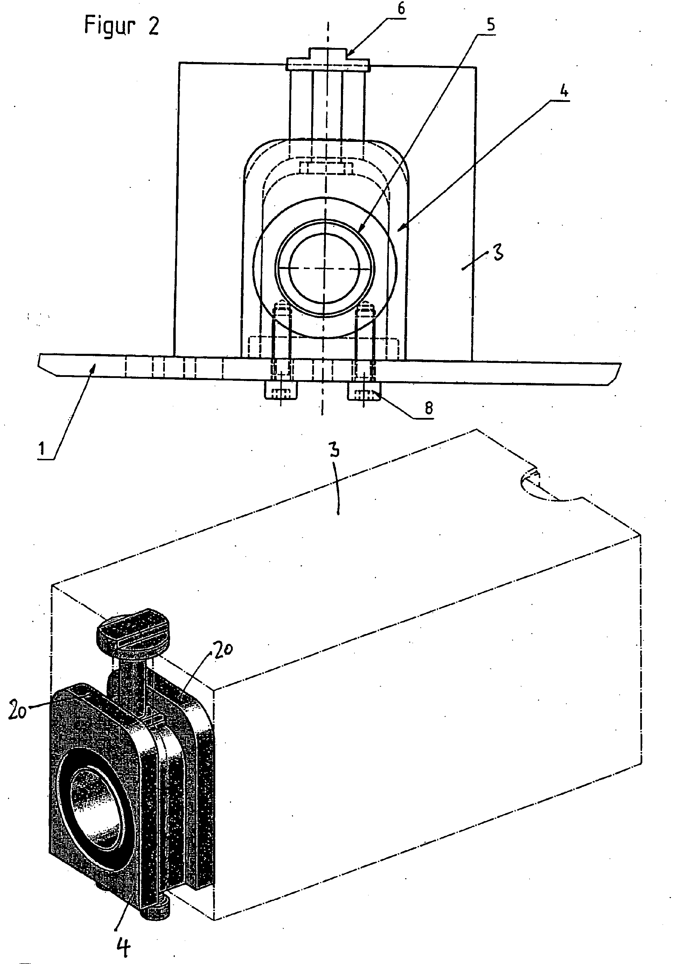

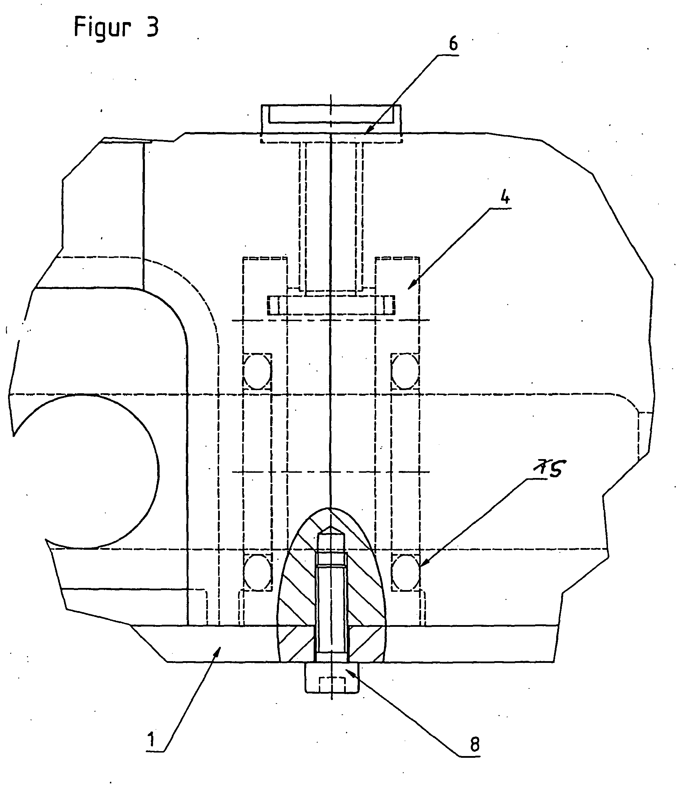

Bei der in den Figuren 1 bis 3 darstellten Ausführungsform sind einteilige Verbindungselemente 4 vorgesehen, die an ihrer Unterseite jeweils zwei Schrauben 8 aufweisen, deren Schraubenkopf von der Bodenfläche des Verbindungselementes 4 einen Abstand hat, der mit der Dicke der Montageplatte 1 übereinstimmt.

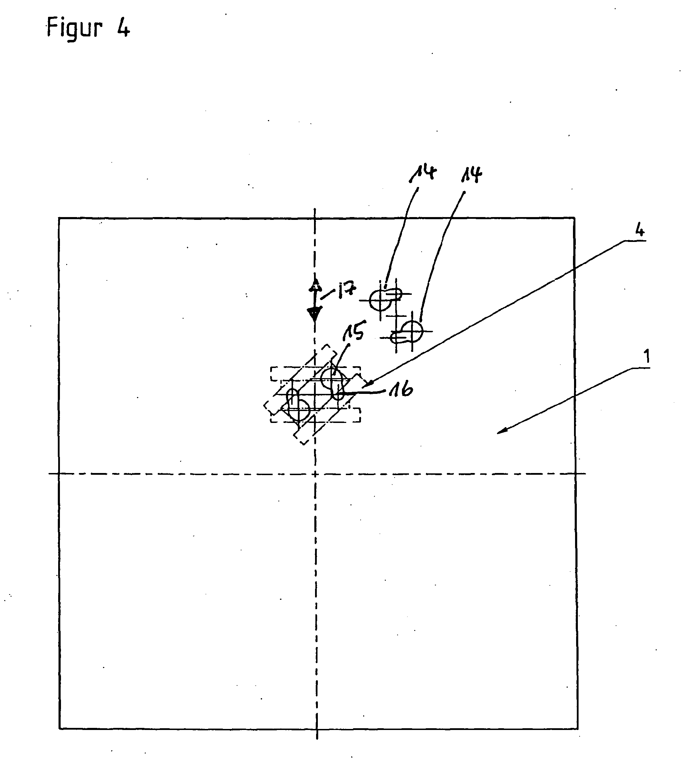

Wie Figur 4 zeigt, sind zur "schwimmenden Verrastung" der Verbindungselemente 4 jeweils zwei zusammengehörende Löcher 14 in der Montageplatte 1 ausgebildet, die zusammengesetzt sind aus einem etwa kreisrunden Abschnitt 15 größeren Durchmessers und einem anschließenden länglichen Abschnitt 16 geringerer Breite. Die Verbindungselemente 4 werden in der Weise an der Montageplatte 1 befestigt, daß die beiden bodenseitigen Schrauben 8 durch die Abschnitte 15 der Löcher 14 hindurchgesteckt werden, woraufhin die Befestigungselemente 4 so gedreht werden, daß die Schäfte der Schrauben 8 in die Abschnitte 16 geringerer Breite wandern. Diese Bajonett-ähnliche Befestigung ermöglicht es, daß die Befestigungselemente in der Darstellung der Figur 4 in der Befestigungslage in Richtung des Doppelpfeils 17 beweglich verrastet sind.

In beide Stirnseiten des Verbindungselementes 4 sind am Rand des Strömungskanals 18, der mit den beiderseitigen Strömungskanälen 2 fluchtet, O-Ringe 5 in Nuten eingelassen, die im montierten Zustand für eine sichere Abdichtung sorgen.

Nachdem das Verbindungselement 4 schwimmend mit der Montageplatte 1 verrastet ist, werden die zwei zu montierenden Funktions-/Baueinheiten 3 in der Darstellung der Figur 1 von oben auf das Verbindungselement 4 aufgesteckt, wobei Ansätze 19 der Funktions-/Baueinheiten 3 Schulterabschnitte 20 des Verbindungselementes 4 so übergreifen, daß die Funktions-/Baueinheiten 3 mit den Stirnflächen 21 fest gegen die Außenflächen des Verbindungselementes 4 gepreßt werden, derart, daß die O-Ringe 5 für eine sichere Abdichtung der Anschlußöffnungen sorgen.

Anschließend wird eine Schraube/Verrastung 6 in von oben in seitliche Ausfräsungen oder Verrastungen des Verbindungselementes 4 oder in eine in das Verbindungselement 4 eingelassene Gegenbefestigung eingedreht, bis der Kopf der Schraube/ Verrastung 6 auf der Oberseite der Funktions-/Baueinheiten 3 aufliegt, wodurch diese sicher in ihrer Position gehalten sind.

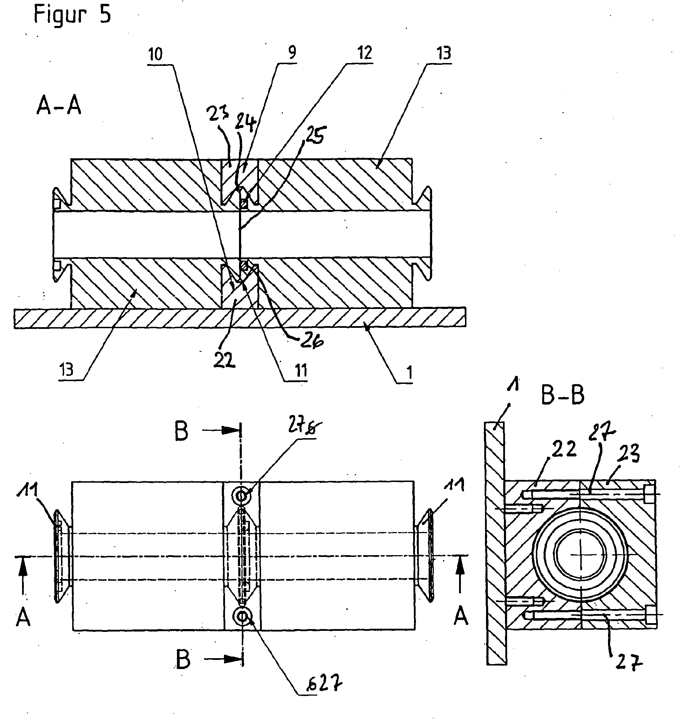

Bei der in Figur 5 dargestellten zweiten Ausführungsform werden zwei Funktions-/Baueinheiten 13 durch eine keilförmige Klemmverbindung zusammengepreßt. Die Verbindungselemente 9 bestehen bei dieser Ausführungsform aus einem unteren Teil 22, das wiederum mittels zweier vom Boden überstehender Schrauben auf die oben beschriebene Weise mit der Montageplatte 1 schwimmend verrastet ist, obwohl dies in der Zeichnung nicht dargestellt ist, sowie aus einem oberen Teil 23. Die beiden Teile 22 und 23 haben an ihrem inneren Rand eine umlaufende V-Nut 24.

Die beiden Funktions-/Baueinheiten 13 haben im Bereich der Anschlußöffnungen 25 ringförmige keilartig hinterschnittene Ansätze 11, die mit ihren Stirnflächen aneinander anliegen, wobei in eine Stirnfläche ein O-Ring 26 eingelassen ist.

Die zusammengesetzten Ansätze 11 haben eine der Nut 24 entsprechende Kontur, so daß dann, wenn das obere Teil 23 des Verbindungselementes 9 mit dem unteren Teil 22 mittels Schrauben 27 verschraubt wird, die Ansätze 11 fest aneinander angepreßt werden, wobei der O-Ring 26 für eine sichere Abdichtung sorgt.

Es wird betont, dass die Erfindung nicht auf die beschriebenen und dargestellten Ausführungsformen beschränkt ist. Vielmehr sind alle offenbarten Merkmale des Fluidsystems auf jede Weise einzeln miteinander kombinierbar.

## Patentansprüche

1. Fluidsystem mit Strömungswegen für Gase und/oder Flüssigkeiten, mit im wesentlich prismatischen Funktions-/Baueinheiten (313) die Strömungskanäle (2) und in Stirnflächen Anschlußöffnungen für benachbarte Funktions-/Baueinheiten aufweisen, und mit einer Montageplatte (1) für die Funktions- /Baueinheiten (313), die mit ihrer Grundfläche im Kontakt mit der Montageplatte (1) stehen, wobei die Funktions-/Baueinheiten in der Befestigungslage mit Seitenflächen aneinander anliegen und durch Dichtungsringe (5) gegeneinander abgedichtet sind,
**dadurch gekennzeichnet,**
**daß** Verbindungselemente (4,9) für benachbarte Funktions-/Baueinheiten (3,13) mit der Montageplatte (1) mit seitlichem Spiel verrastet sind, und daß die Funktions-/Baueinheiten (3,13) lösbar auf die Verbindungselemente (4,9) aufgesteckt sind.

2. System nach Anspruch 1,
**dadurch gekennzeichnet,**
**daß** die Verbindungselemente (4) einteilig sind und in beide Seitenflächen eingesetzte O-Ringe (5) haben, die die Anschlußöffnungen der anliegenden Funktions-/Baueinheiten (3) umgeben.

3. System nach Anspruch 2,
**dadurch gekennzeichnet,**
**daß** die Funktions-/Baueinheiten (3) durch wenigstens eine Schraube/Verrastung (6) in der aufgesteckten Befestigungslage gesichert sind.

4. System nach Anspruch 1,
**dadurch gekennzeichnet,**
**daß** die Verbindungselemente (9) aus vorzugsweise zwei Teilen (22,23) zusammengesetzt sind und daß ein Teil (22) mit der Montageplatte (1) mit seitlichem Spiel verrastet ist.

5. System nach einem der Ansprüche 1 oder 4,
**dadurch gekennzeichnet,**
**daß** die Funktions-/Baueinheiten (13) im Bereich der Anschlußöffnungen (25) ringförmige, keilartig hinterschnittene Ansätze (11) aufweisen, die mit ihren Stirnflächen aneinander anliegen, wobei in eine Stirnfläche ein O-Ring (26) eingelassen ist.

6. System nach 5,
**dadurch gekennzeichnet,**
**daß** die Teile (22, 23) der Verbindungselemente (9) eine der Randkontur der aneinander anliegenden Ansätze (11) entsprechende, etwa V-förmige Aussparung (24) an ihrem insgesamt kreisförmigen inneren Rand aufweisen, derart, daß die Teile (22,23) der Verbindungselemente (9) im montierten Zustand die Ansätze (11) aneinander anpressen.

7. System nach Anspruch 6,
**dadurch gekennzeichnet,**
**daß** die bevorzugt zwei Teile (22,23) jedes Verbindungselementes (9) im montierten Zustand miteinander verschraubt/verrastet sind.

## Claims

1. A fluid system with flow paths for gases and/or liquids with substantially prismatic functional/structural units (3,13), which have flow passages to and, in end surfaces, connection openings for adjacent functional/structural units, and a mounting plate (1) for the functional/structural units (3, 13) whose base surface is in contact with the mounting plate (1), wherein the functional/structural units engage one another with side surfaces in the fastened position and are sealed with respect to one another by sealing rings (5), **characterised in that** connecting elements (4, 9) for adjacent functional/structural units (3, 13) are locked to the mounting plate (1) with lateral moveability and that the functional/structural units (13) are releasably pushed onto the connecting elements (4, 9).

2. A system as claimed in claim 1, **characterised in that** the connecting elements (4) are of one-piece construction and have O rings (5) inserted into both side surfaces, which surround the connection openings of the engaging functional/structural units (3).

3. A system as claimed in claim 2, **characterised in that** the functional/structural units (3) are secured in the pushed-on secured position by means of at least one screw/lock (6).

4. A system as claimed in claim 1, **characterised in that** the connecting elements (9) consist of preferably two components (22, 23) and that one component (22) is locked to the mounting plate (1) with lateral moveability.

5. A system as claimed in any one of claims 1 or 4, **characterised in that** in the vicinity of the connection openings (25), the functional/structural units (13) have annular, wedge-shaped, undercut formations (11), whose end faces engage one another, wherein an O ring (26) is recessed into one end face.

6. A system as claimed in claim 5, **characterised in that** the components (22, 23) of the connecting elements (9) have an approximately V shaped cut out (24), which corresponds to the end contour of the formations (11) engaging one another on their overall circular inner edge such that the components (22, 23) of the connecting elements (9) press against one another in the assembled state of the formations (11).

7. A system as claimed in claim 6, **characterised in that** the preferably two components (22, 23) of each connecting element (9) are screwed/locked together in the assembled state.

## Revendications

1. Système de fluide avec des voies d'écoulement pour des gaz et/ou des liquides, comportant des unités modulaires et fonctionnelles (3, 13) sensiblement prismatiques, qui comportent des canaux d'écoulement (2) et, dans les faces frontales, des orifices de raccordement pour des unités modulaires et fonctionnelles voisines, et comportant une plaque de montage (1) pour les unités modulaires et fonctionnelles (3, 13), dont la surface de base est en contact avec la plaque de montage (1), lesdites unités modulaires et fonctionnelles, dans leur position de fixation, étant en appui les unes contre les autres par leurs faces latérales et étant étanchées les unes par rapport aux autres par des bagues d'étanchéité (5), **caractérisé en ce que** des éléments de liaison (4, 9) pour des unités modulaires et fonctionnelles (3, 13) voisines sont attachés avec un jeu latéral à la plaque de montage (1), et **en ce que** les unités modulaires et fonctionnelles (3, 13) sont enfichées de manière amovible sur les éléments de liaison (4, 9).

2. Système selon la revendication 1, **caractérisé en ce que** les éléments de liaison (4) sont en une seule pièce et ont des joints toriques (5) insérés dans les deux faces latérales, lesquels entourent les orifices de raccordement des unités modulaires et fonctionnelles (3) adjacentes.

3. Système selon la revendication 2, **caractérisé en ce que** les unités modulaires et fonctionnelles (3) sont bloquées dans la position de fixation enfichée par au moins un blocage et/ou une vis (6).

4. Système selon la revendication 1, **caractérisé en ce que** les éléments de liaison (9) sont formés de préférence en deux parties (22, 23) et **en ce qu'**une partie (22) est attachée avec un jeu latéral à la plaque de montage (1).

5. Système selon la revendication 1 ou 4, **caractérisé en ce que** les unités modulaires et fonctionnelles (13) comportent, dans la zone des orifices de raccordement (25), des saillies (11) annulaires à contre-dépouille en forme de clavette, qui sont adjacentes les unes aux autres par leurs faces frontales, un joint torique (26) étant inséré dans une face frontale.

6. Système selon la revendication 5, **caractérisé en ce que** les parties (22, 23) des éléments de liaison (9), sur leur bord intérieur circulaire dans l'ensemble, comportent un évidement (24) en forme de V, correspondant au contour du bord des saillies (11) adjacentes entre elles, de telle sorte que les parties (22, 23) des éléments de liaison (9) sont pressées l'une contre l'autre dans la position montée des saillies (11).

7. Système selon la revendication 6, **caractérisé en ce que** lesdites, de préférence, deux parties (22, 23) de chaque élément de liaison (9) sont bloquées et/ou vissées l'une à l'autre dans la position montée.
